# NEUE EUROPÄISCHE PATENTSCHRIFT

(11) **EP 0 299 444 B2**
(45) Veröffentlichungstag und Bekanntmachung des Hinweises auf die Entscheidung über den Einspruch: **14.02.2007**
(45) Hinweis auf die Patenterteilung: 01.06.1994
(21) Anmeldenummer: 88111172.8
(22) Anmeldetag: 13.07.1988
(51) Int. Cl.: C08G 69/26, C08G 69/36

(54) **Teilaromatische Copolyamide mit verringertem Triamingehalt**
Partially aromatic polyamides with a reduced triamine content
Copolyamides partiellement aromatiques avec un taux de triamine abaissé

(30) Priorität: 17.07.1987 DE 3723688; 12.02.1988 DE 3804371
(43) Veröffentlichungstag der Anmeldung: 18.01.1989
(73) Patentinhaber: BASF Aktiengesellschaft, 67063 Ludwigshafen (DE)
(72) Erfinder: Reimann, Horst, Dr., D-6520 Worms 1 (DE); Pipper, Gunter, D-6702 Bad Duerkheim (DE); Weiss, Hans-Peter, Dr., D-6704 Mutterstadt (DE); Plachetta, Christoph, Dr., D-6703 Limburgerhof (DE); Koch, Eckhard Michael, Dr., D-6701 Fussgoenheim (DE); Blinne, Gerd, Dr., D-6719 Bobenheim (DE); Goetz, Walter, Dr., D-6750 Kaiserslautern (DE); Steiert, Peter, Dr., D-6700 Ludwigshafen (DE)

(56) Entgegenhaltungen:
- EP-A- 0 034 757
- EP-A- 0 193 023
- EP-B- 0 129 195
- EP-B- 0 129 196
- DE-A- 1 961 746
- JP-A- 61 159 422
- US-A- 4 603 166
- US-A- 4 603 166
- Sen-I Gakkaishi Nr. 12(29) (1973), Seiten 538-545
- Kuze-Katsuaki et.al.abstract " Synthesis of polyamides having aromatic rings in the main chain ", Kobunshi Kagaku, Polymer Chemistry ,Vol.25 (277) Seiten 318-324
- J.of Polymer Science, Vol.XLII, Seiten 249-257 (1960 )
- Vieweg et al., Kunststoffhandbuch, Bd.VI,Polyamide, Seite 15, Seiten 491-493

## Beschreibung

Die Erfindung betrifft teilaromatische Copolyamide, dadurch gekennzeichnet, dass sie
A) 50 - 80 Gew.-% Einheiten, die sich von Terephthalsäure und Hexamethylendiamin ableiten, und
B) 20 - 50 Gew.-% Einheiten, die sich von ε-Caprolactam ableiten,
enthalten und die Copolyamide einen Triamingehalt von weniger als 0,5 Gew.-% aufweisen.

Darüber hinaus betrifft die Erfindung die Verwendung derartiger teilaromatischer Copolyamide zur Herstellung von Fasern, Folien und Formkörpern wie elektrischen Leiterplatten und Teilen für den Fahrzeug- und Maschinenbau, sowie die aus den teilaromatischen Copolyamiden als wesentlichen Bestandteilen erhältlichen Fasern, Folien und Formkörper.

Polyamide wie Poly-ε-Caprolactam und Polyhexamethylenadipinsäureamid zählen zu den seit langem bekannten technischen Kunststoffen und haben auf vielen Gebieten Anwendung gefunden. Sie zeichnen sich im allgemeinen durch eine große Härte, Steifigkeit und eine gute Wärmeformbeständigkeit aus, sind darüber hinaus widerstandsfähig gegen Abrieb und Verschleiß und auch beständig gegen viele Chemikalien.

Für einige Einsatzzwecke wäre es jedoch wünschenswert, wenn die Wärmeformbeständigkeit der Polyamide weiter verbessert werden könnte, ohne die verbleibenden mechanischen Eigenschaften zu beeinträchtigen.

Diese Anforderungen werden von einigen Copolyamiden erfüllt, in denen ein Teil der aliphatischen Einheiten durch aromatische Einheiten ersetzt sind, z.B. Copolyamide aus Adipinsäure, Terephthalsäure, Hexamethylendiamin und ε-Caprolactam in beliebiger Kombination.

In der DE-PS 929 151 wird ein Verfahren zur Herstellung von hochpolymeren linearen Polyamiden beschrieben, gemäß welchem eine Mischung aus einer aromatischen para-Dicarbonsäure oder einem amidbildenden Derivat dersel-ben, einer äquivalenten Menge eines aliphatischen oder cycloaliphatischen Diamins und anderem polyamidbildendem Ausgangsmaterial, wie Lactamen unter polyamidbildenden Bedingungen kondensiert wird. Ausweislich der Beispiele erfolgt die Herstellung der Produkte auf herkömmlichem Weg im Autoklaven, was bei der Verwendung von Terephthalsäure im Monomergemisch zu einer verstärkten Triaminbildung aus dem ebenfalls anwesenden Hexamethylendiamin führt, wodurch eine starke Vernetzung des Produktes eintritt und die Gebrauchseigenschaften desselben wesentlich beeinträchtigt werden.

In der GB-PS 1 114 541 werden ternäre Copolyamide beschrieben, die neben einem Hauptteil an Polyhexamethylenadipinamid 20 - 40 Gew.-% Einheiten, die sich von Terephthalsäure und Hexamethylendiamin ableiten und 2 - 20 Gew.-% einer weiteren Polyamidkomponente enthalten. Durch den relativ geringen Anteil von maximal 40 Gew.-% Einheiten von Terephthalsäure und Hexamethylendiamin ist die Verbesserung der Wärmeformbeständigkeit in diesen Produkten gegenüber herkömmlichem Polyhexamethylenadipinsäureamid nur gering.

In der DE-OS 16 69 455 wird ein Verfahren zur Herstellung von verstreckten Polyamidfäden durch Schmelzspinnen eines Mischpolyamids beschrieben, wobei das Mischpolyamid maximal 40 Gew.-% Einheiten enthält; die sich von Terephthalsäure und Hexamethylendiamin ableiten, und die Herstellung dieser Polyamide in Gegenwart von mindestens 3 Mol.-% eines monofunktionellen sauren oder basischen Stabilisators durchgeführt wird. Wie die in der GB-PS 1 114 541 beschriebenen Produkte, weisen auch die in der DE-OS 16 69 455 aufgeführten Copolyamide nur in geringem Umfang verbesserte Wärmeformbeständigkeiten gegenüber herkömmlichen Polyamiden auf.

In der DE-OS 16 20 997 werden lineare faserbildende Terpolyamide beschrieben, die Einheiten, die sich von Adipinsäure und Hexamethylendiamin, von Terephthalsäure und Hexamethylendiamin und von Isophthalsäure und Hexamethylendiamin ableiten, enthalten. Die Einbeziehung von Isophthalsäure in das Monomergemisch bringt es mit sich, dass die durch die Einbeziehung von Terephthalsäure gewonnene verbesserte Wärmeformbeständigkeit zum Teil wieder zunichte gemacht wird. Dementsprechend werden die in der DE-OS 16 20 997 beschriebenen Produkte auch zur Anwendung als Verstärkungsfasern in Fahrzeugreifen empfohlen, d.h. für Anwendungsgebiete bei denen es auf die hohe Wärmeformbeständigkeit nicht ankommt.

In der DE-OS 34 07 492 wird ein Verfahren zur Herstellung von Copolyamiden aus Adipinsäure, Terephthalsäure und Hexamethylendiamin beschrieben, wobei das Copolyamid 25 - 48 Gew.-% Einheiten des Hexamethylenterephthalamids enthält und gemäß dem Verfahren eine 40 - 70 %ige wässrige Lösung der Monomeren in weniger als 15 Minuten auf wenigstens 250°C erhitzt und bis zu einer relativen Viskosität von 1,5 - 2,4 kondensiert wird. Anschließend wird das Wasser in einer oder mehreren Stufen abdestilliert und das entstandene Vorkondensat in bekannter Weise nachkondensiert. Ausweislich der Beschreibung und der Beispiele beträgt die Verweilzeit der Monomermischung bei der Vorkondensation vorzugsweise 1 -10 Minuten, in den Beispielen werden Verweilzeiten von 9,5 Minuten genannt. Derartige Verweilzeiten von mehr als 1 Minute führen jedoch bei der kontinuierlichen Herstellung der beschriebenen Copolyamide zur verstärkten Bildung von Triaminen, welche wiederum eine Vernetzung der gebildeten Produkte begünstigen, was zu Schwierigkeiten bei kontinuierlichen Herstellungsverfahren führt und die Produkteigenschaften negativ beeinflusst.

In den EP-A 129 195 und EP-A 129 196 werden Verfahren zur kontinuierlichen Herstellung von Polyamiden beschrieben, bei dem zunächst wässrige Lösungen von Salzen aus Dicarbonsäuren mit 6 - 18 Kohlenstoffatomen und Diaminen mit 6 - 18 Kohlenstoffatomen unter erhöhtem Druck unter gleichzeitiger Verdampfung von Wasser und Bildung eines Präpolymeren auf eine Temperatur von 250 - 300°C erhitzt werden, Präpolymeres und Dampf kontinuierlich getrennt, die Dämpfe rektifiziert und mitgeführte Diamine zurückgeleitet werden, wobei ein wesentliches Verfahrensmerkmal darin liegt, dass man die wässrigen Salzlösungen unter einem überdruck von 1 - 10 bar innerhalb einer Verweilzeit von höchstens 60 Sekunden erhitzt, mit der Maßgabe, dass bei Austritt aus der Verdampferzone der Umsetzungsgrad mindestens 93 % und der Wassergehalt des Präpolymeren höchstens 7 Gew.-% beträgt. In der Beschreibung wird ausgeführt, dass diese Verfahrensweise die Triaminbildung bei der Herstellung herkömmlicher Polyamide, wie Poly-ε-Caprolactam und Polyhexamethylenadipinsäureamid deutlich verringert, doch ist kein Hinweis darauf zu entnehmen, dass dieser Effekt in besonderem Maße bei der Herstellung von teilaromatischen Copolyamiden eintritt, die mindestens 40 Gew.-% Einheiten enthalten, die sich von Terephthalsäure und Hexamethylendiamin ableiten.

Aufgabe der vorliegenden Erfindung war es daher, teilaromatische Copoly-amide mit verbesserter Wärmeformbeständigkeit und guten mechanischen Eigenschaften zur Verfügung zu stellen, die darüber hinaus auf einfachem Wege kontinuierlich hergestellt werden können, ohne dass Probleme im Hinblick auf Vernetzungen auftreten.

Eine weitere Aufgabe der Erfindung ist die Bereitstellung von Copolyamiden, die sich mit entsprechenden Kautschuken schlagzäh modifizieren lassen.

Eine weitere Aufgabe der Erfindung ist die Bereitstellung von Copolyamiden, die - mit oder ohne Schlagzähmodifizierung - sich in einfacher Weise flammwidrig ausrüsten lassen.

Erfindungsgemäß werden diese Aufgaben durch die eingangs definierten teilaromatischen Copolyamide gelöst, die sich zur Herstellung vielfältiger Halbzeuge und Fertigprodukte eignen.

Die erfindungsgemäßen teilaromatischen Copolyamide enthalten als Komponente A) im allgemeinen 50 - 80 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die erfindungsgemäßen Copolyamide-Einheiten, die sich von ε-Caprolactam ableiten.

Der Anteil an Einheiten die sich von ε-Caprolactam ableiten, beträgt 20 - 50 Gew.-%, insbesondere 25 - 40 Gew.-%.

Als besonders vorteilhaft für viele Anwendungszwecke haben sich Polyamide mit 50 - 80, insbesondere 60 - 75 Gew.-% Einheiten, die sich von Terephthalsäure und Hexamethylendiamin ableiten (Einheiten A)) und 20 - 50, vorzugsweise 25 - 40 Gew.-% Einheiten, die sich von ε-Caprolactam ableiten (Einheiten B)), erwiesen.

Neben den vorstehend beschriebenen Einheiten A) und B) können die erfindungsgemäßen teilaromatischen Copolyamide noch untergeordnete Mengen, vorzugsweise nicht mehr als 15 Gew.-%, insbesondere nicht mehr als 10 Gew.-% an weiteren Polyamidbausteinen enthalten, wie sie von anderen Polyamiden bekannt sind. Diese Bausteine können sich von Dicarbonsäuren mit 4 bis 16 Kohlenstoffatomen und aliphatischen oder cycioalphatischen Diaminen mit 4 bis 16 Kohlenstoffatomen sowie von Aminocarbonsäuren bzw. entsprechenden Lactamen mit 7 - 12 Kohlenstoffatomen ableiten. Als geeignete Monomere dieser Typen seien hier nur Suberinsäure, Azelainsäure, Sebacinsäure oder Isophthalsäure als Vertreter der Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, önanthlactam, Omega-Aminoundecansäure und Laurinlactam als Vertreter von Lactamen bzw. Aminocarbonsäuren genannt.

Wesentliches Merkmal der erfindungsgemäßen teilaromatischen Copolyamide ist der verringerte Triamingehalt von weniger als 0,5, vorzugsweise weniger als 0,3 Gew.-%.

Nach den bisher bekannten Verfahren hergestellte teilaromatische Copoly-amide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Bedingt durch den niedrigeren Triamingehalt weisen die erfindungsgemäßen Copolyamide bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit wie die Produkteigenschaften erheblich.

Die Schmelzpunkte der erfindungsgemäßen teilaromatischen Copolyamide liegen im Bereich von 260°C bis über 300°C, wobei dieser hohe Schmelzpunkt auch mit einer hohen Glasübergangstemperatur von in der Regel mehr als 75, insbesondere mehr als 85°C verbunden ist.

Binäre Copolyamide auf der Basis von Terephthalsäure, Hexamethylendiamin und ε-Caprolactam weisen bei Gehalten von etwa 70 Gew.-% an Einheiten, die sich von Terephthalsäure und Hexamethylendiamin ableiten, Schmelzpunkte im Bereich von 300°C und eine Glasübergangstemperatur von mehr als 110°C auf.

Wie bei konventionellen Polyamiden sinkt auch bei den erfindungsgemäßen teilaromatischen Copolyamiden die Glasübergangstemperatur durch Wasseraufnahme, z.8. bei Lagern an der Luft, ab. Im Gegensatz zu den herkömmlichen Polyamiden, bei denen dadurch die Glasübergangstemperatur in der Regel unter O°C sinkt, weisen die erfindungsgemäßen Copolyamide auch nach Wasseraufnahme (Konditionierung) noch Glasübergangstemperaturen von deutlich über O°C auf, was sich auf die Festigkeit und Steifigkeit bei Normalbedingungen, z.B. bei Raumtemperatur sehr positiv auswirkt.

Die Herstellung der erfindungsgemäßen Copolyamide kann nach dem in den EP-A 129 195 und 129 196 beschriebenen Verfahren erfolgen.

Gemäß diesem Verfahren wird eine wässrige Lösung der Monomeren, d.h. in diesem Fall der Monomeren, die die Einheiten A) bis B) bilden, unter erhöhtem Druck unter gleichzeitiger Verdampfung von Wasser und Bildung eines Präpolymeren auf eine Temperatur von 250 - 300°C erhitzt, anschließend werden Präpolymere und Dämpfe kontinuierlich getrennt, die Dämpfe rektifiziert und die mitgeführten Diamine zurückgeleitet. Schließlich wird das Präpolymer in eine Polykondensationszone geleitet und unter einem Überdruck von 1 - 10 bar und einer Temperatur von 250 - 300°C polykondensiert. Wesentlich ist bei dem Verfahren, dass die wässrige Salzlösung unter einem Überdruck von 1 - 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.-% beträgt.

Durch diese kurzen Verweilzeiten wird die Bildung von Triaminen weitgehend verhindert.

Die verwendeten wässrigen Lösungen haben in der Regel einen Monomergehalt von 30 - 70 Gew.-%, insbesondere von 40 - 65 Gew.-%.

Die wässrige Salzlösung wird vorteilhaft mit einer Temperatur von 50 - 100°C kontinuierlich in eine Verdampferzone geleitet, wo die wässrige Salzlösung unter einem Überdruck von 1 - 10, vorzugsweise von 2 - 6 bar auf eine Temperatur von 250 - 330°C erhitzt wird. Es versteht sich, dass die angewandte Temperatur über dem Schmelzpunkt des jeweils herzustellenden Polyamids liegt.

Wie bereits erwähnt, ist es wesentlich, dass die Verweilzeit in der Verdampferzone maximal 60 Sekunden, vorzugsweise 10 - 55 Sekunden und insbesondere 10 - 40 Sekunden beträgt.

Der Umsatz beim Austritt aus der Verdampferzone beträgt mindestens 93, vorzugsweise 95 - 98 % und der Wassergehalt liegt vorzugsweise im Bereich von 2 - 5, insbesondere 1 - 3 Gew.-%.

Die Verdampferzone ist vorteilhaft als Röhrenbündel ausgebildet. Besonders bewährt haben sich Röhrenbündel, in denen der Querschnitt der einzelnen Röhren periodisch wiederkehrend rohrförmig und spaltförmig ausgebildet ist.

Ferner hat es sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, Z.B. Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, dass die Menge des mit Wasserdampf freigesetzten Diamins erheblich vermindert wird. In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die bei dem Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebboderikolonnen mit 5 bis 15 theoretischen Böden. Die Kolonne wird zweckmäßig unter den identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht und in der Regel eine relative Viskosität von 1,2 - 1,7 hat, wird in einer Polymerisationszone geleitet. In der Polymerisationszone wird die anfallende Schmelze bei einer Temperatur von 250 - 330°C, insbesondere 270 - 310°C, und unter einem Überdruck von 1 - 10 bar, insbesondere 2 - 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 - 30 Minuten ein. Das so erhaltene Polyamid, das in der Regel eine relative Viskosität von 1,2 - 2,3 hat, wird kontinuierlich aus der Kondensationszone entnommen.

Nach einer bevorzugten Arbeitsweise leitet man das so erhaltene Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird vorteilhaft in fester Phase mittels überhitztem Wasserdampf bei einer Temperatur unterhalb des Schmelzpunktes, z.B. von 170 - 240°C, bis zur gewünschten Viskosität kondensiert. Vorteilhaft verwendet man hierfür den am Kopf der Kolonne anfallenden Wasserdampf.

Die relative Viskosität, gemessen in 1 % Lösung (1 g/100 ml) in 96 Gew.-% H₂SO₄ bei 23°C, liegt nach der Festphasennachkondensation im allgemeinen im Bereich von 2,2 - 5,0, vorzugsweise von 2,3 - 4,5.

Nach einer anderen bevorzugten Arbeitsweise wird die aus der Polykondensationszone ausgetragene Polyamidschmelze in eine weitere 15 Polykondensationszone geleitet und dort unter fortlaufender Ausbildung neuer Oberflächen bei einer Temperatur von 285 bis 310°C vorteilhaft unter vermindertem Druck, z.B. von 1 - 500 mbar, bis zur gewünschten Viskosität kondensiert. Geeignete Vorrichtungen sind als Finisher bekannt.

Ein weiteres Verfahren, welches dem vorstehend beschriebenen ähnelt, ist in der EP-A 129 196 beschrieben, worauf hier wegen weiterer Einzelheiten des Verfahrens verwiesen wird.

Die erfindungsgemäßen teilaromatischen Copolyamide zeichnen sich durch eine sehr gute Wärmeformbeständigkeit bei guten mechanischen Eigenschaften aus, wobei das gute Eigenschaftsniveau durch die hohe Glasübergangstemperatur auch nach Konditionierung über einen relativ großen Temperaturbereich aufrechterhalten wird.

Dementsprechend eignen sich die erfindungsgemäßen Copolyamide zur Herstellung von Folien und Formteilen.

### Herstellbeispiele

### Beispiel 1

Eine wässrige Lösung, bestehend aus 35 kg ε-Caprolactam, 55 kg Terephthalsäure, 38,5 kg Hexamethylendiamin und 128,5 kg Wasser wurde aus einem beheizten Vorratsbehälter bei ca. 80°C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 295°C hatte, bei kräftiger Umwälzung beheizt. Der Verdampfer hatte eine Länge von 3 m und einen Inhalt von 180 ml und eine wärmeübertragende Oberfläche von etwa 1300 cm2. Die Verweilzeit im Verdampfer betrug 50 sec. Das aus dem Verdampfer austretende Gemisch aus Präpolymeren und Wasserdampf hatte eine Temperatur von 290°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 I Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,05 Gew.-% und einen Gehalt an ε-Caprolactam von weniger als 0,1 Gew.-%. Als Kolonnensumpf erhielt man eine wässrige Lösung von Hexamethylendiamin, die 80 Gew.-% Hexamethylendiamin und 1 bis 3 % ε-Caprolactam, jeweils bezogen auf erzeugtes Polyamid enthielt. Diese Lösung wurde über eine Pumpe wieder vor dem Eintritt in den Verdampfer der Ausgangssalzlösung zugegeben.

Nach dem Verdampfer hatte das Präpolymere eine relative Viskosität von 1,25, gemessen in 96 gew.-%iger Schwefelsäure bei 20°C und wies nach der Endgruppenanalyse einen Umsatz von 93 bis 95 % auf. Der Gehalt an Bis-hexamethylentriamin betrug 0,1 bis 0,15 Gew.-%, bezogen auf Polyamid.

Nach Austritt der Polymerschmelze aus dem Abscheider hatte das Polyamid eine sehr helle Eigenfarbe und einen äußerst niedrigen Gehalt an Bis-hexa methylentriamin von 0,17 % sowie eine relative Viskosität von 1,65 bis 1,80.

Das Produkt wies in etwa eine Äquivalenz von Carboxyl- und Aminoendgruppen auf.

Der Gehalt an extrahierbaren Anteilen (Extraktion mit Methanol) betrug 3,1 bis 3,3 Gew.-%.

Im Austragsextruder wurde die Schmelze dann auf Normaldruck entspannt und bei einer Verweilzeit von weniger als 1 Minute praktisch nicht mehr weiter kondensiert. Das erhaltene Granulat wurde durch kontinuierliche Festphasenkondensation mit überhitztem Wasserdampf bei 195°C und einer Ver-weilzeit von 30 Stunden auf eine Endviskosität von η-rel = 2,50 kondensiert. Der Gehalt an extrahierbaren Anteilen betrug dann 0,2 Gew.-% (Methanolextrakt).

Zur Anwendung der erfindungsgemäßen Copolymeren ist das folgende besonders zu erwähnen:

Die erfindungsgemäßen Copolyamide lassen sich ohne weiteres z.B. zu Fasern verarbeiten, wie das nachstehende Anwendungsbeispiel 1 zeigt.

### Anwendungsbeispiel 1

Ein Copolyamid bestehend aus 30 Gew.-% Caprolactam- und 70 Gew.-% Hexamethylendiamin-terephthaleinheiten (hergestellt wie in Beispiel 1) mit einer rel. Viskosität von 2,42 (gemessen wie beschrieben in Beispiel 1) und einem Schmelzpunkt (gemessen nach DSC-Verfahren) von 295°C, wurde in einer handelsüblichen Extruder-Schmelzspinnanlage unter folgenden Bedingungen versponnen:
Durchsatz: 1,2 kg/Std.
Schmelzetemperatur: 335°C
Spinngeschwindigkeit: 690 m/min
Spinndüse: 20 Loch; Loch-Durchmesser 0,25 mm

Die erhaltenen Fäden wurden anschließend heiß verstreckt:
Streckverhältnis: 1:2,4
Strecktemperaturen 120°C (Galette) und 140°C (Heizplatte) Streckgeschwindigkeit:
735 m/min

Die verstreckten Fäden hatten folgende Eigenschaften:
Gesamttiter: 112/20 dtex
Reißfestigkeit: 4,65 cN/dtex (4,6)
Bruchdehnung: 20 % (36)

Anfangsmodul: 60 cN/dtex
Anfärbbarkeit mit anionischen Farbstoffen: vergleichbar mit Polyhexamethylenadipinsäureamid (Polyamid-6,6)
Echtheiten (Licht-, Wasch-, Schweiß-) vergleichbar mit Polyamid-6,6
Nassfestigkeit: 87 (87)
UV-Stabilität (Xenontest, 28 Tage): 69 % (52 %)
Hitzebehandlung (3 Std. 190°): 37 % (40 %)

Die in Klammern angegebenen Werte gelten für Polyamid-6,6.

Zur Anwendung der erfindungsgemäßen Copolyamide ist weiterhin besonders zu erwähnen:

Schlagzäh modifizierte thermoplastische Formmassen auf der Basis der teilaromatischen Copolyamide zeichnen sich durch gute mechanische Eigenschaften, insbesondere Schlagzähigkeit auch bei tiefen Temperaturen und eine gute Temperaturstandfestigkeit aus.

Sie enthalten beispielsweise als wesentliche Komponenten
A) 40 - 95 Gew.-% des teilaromatischen Copolyamids gemäß Anspruch 1
B) 5 - 60 Gew.-% eines schlagzäh modifizierenden Kautschukes, sowie darüber hinaus
C) 0 - 50 Gew.-% faser- oder teilchenförmige Füllstoffe oder deren Mischungen.

Die erfindungsgemäß schlagzähmodifizierten thermoplastischen Formmassen weisen überraschenderweise gegenüber entsprechend modifizierten Formmassen mit Polyhexamethylensebacinsäureamid, insbesondere bei tiefen Temperaturen, eine verbesserte Schlagzähigkeit auf. Dies gilt auch dann, wenn die Massen faser- oder teilchenförmige Füllstoffe oder deren Mischungen enthalten.

Die in den schlagzäh modifizierten Formmassen enthaltenen teilaromatischen Copolyamide A) enthalten 50 - 80 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die Copolyamide A) Einheiten, die sich von ε-Caprolactam ableiten.

Der Anteil an Einheiten die sich von ε-Caprolactam ableiten, beträgt 20 - 50 Gew.-%, insbesondere 25 - 40 Gew.-%.

Als Komponente B) können die erfindungsgemäßen Formmassen gegebenenfalls 5 bis 60, insbesondere 7 bis 50 und besonders bevorzugt 10 bis 35 Gew.-% eines schlagzäh modifizierenden Kautschuks enthalten.

Prinzipiell sind alle Kautschuke geeignet, die in Abmischung mit Polyamiden eine Verbesserung der Schlagzähigkeit gegenüber reinem Polyamid mit sich bringen.

Im allgemeinen handelt es sich dabei um Copolymerisate, die bevorzugt aus mindestens zwei der folgenden Monomeren als Hauptkomponenten aufgebaut sind: Ethylen, Propylen, Butadien, Isobuten, Isopren, Chloropren, Vinylacetat, Styrol, Acrylnitril und Acryl- und Methacrylsäureester mit 1 bis 18 C-Atomen in der Alkoholkomponente.

Kautschuke, die reaktive Komponenten enthalten, die eine Haftung mit den Amin- oder Carboxylendgruppen des Polyamids ermöglichen, werden dabei bevorzugt. Als reaktive Komponenten seien olefinisch ungesättigte Carbonsäuren und deren Anhydride genannt.

Kautschuke B) werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste bevorzugte Gruppe sind die sogenannten Ethylen-Propylen (EPM) bzw. Ethylen-Propylen-Dien-(EPDM)-Kautschuke zu nennen, die vorzugsweise ein Verhältnis von Ethylenresten zu Propylenresten im Bereich von 40:60 bis 90:10 aufweisen.

Die Mooney-Vskositäten (MLI+4/100°C) solcher unvernetzter EPM bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie 20 Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexadien-1,5,5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien nur Acrylsäure, Methacrylsäure und deren Derivate sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren, wie z.B. Maleinsäure und Fumarsäure bzw. Derivate dieser Säuren, wie z.B. Ester und Anhydride, und/oder Epoxy-Gruppen enthalten. Diese Dicarbonsäurederivate bzw. Epoxygruppen werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R₁C(COOR₂)=C(COOR₃)R₄ (I)

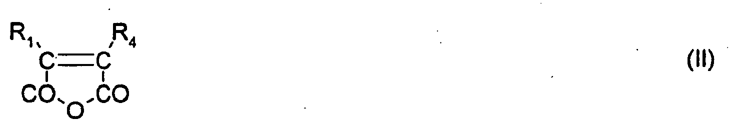

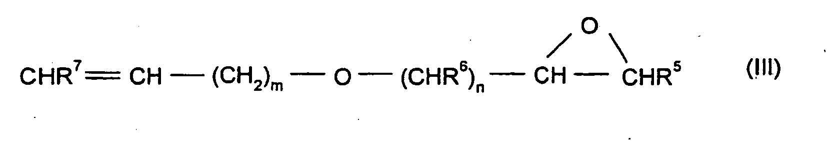

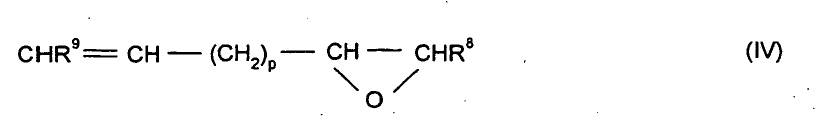

wobei R¹ - R⁹ Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Bevorzugt sind R¹ - R⁷ Wasserstoff, und m hat den Wert 0 oder 1 und n ist 1. Die entsprechenden Verbindungen sind Maleinsäure, Fumarsäure, Maleinsäureanhydrid, Alkylglycidylether oder Vinylglycidylether.

Bevorzugte Verbindungen der Formeln I, II und III sind Maleinsäure, Maleinsäureanhydrid und Epoxygruppen-enthaltende Ester der Acrylsäure und/oder Methacrylsäure, wobei Glycidylacrylat und Glycidylmethacrylat besonders bevorzugt werden.

Der Ethylengehalt der Copolymeren liegt im allgemeinen im Bereich von 50 bis 98 Gew.-%, der Anteil an Epoxygruppen enthaltenden Monomeren und der Anteil des Acrylsäure- und/oder Methacrylsäureesters jeweils im Bereich von 1 bis 49 Gew.-%.

Besonders bevorzugt sind Copolymerisate aus

| | |
|---|---|
| 50 bis 98, | insbesondere 60 bis 95 Gew.-% Ethylen, |
| 0,5 bis 40, | insbesondere 3 bis 20 Gew.-% Glycidylacrylat und/oder Glycidylmethacrylat, Acrylsäure und/oder Maleinsäure-anhydrid, |
| 1 bis 45, | insbesondere 10 bis 35 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190°C und 2,16 kg Belastung).

Bevorzugte Elastomere (Kautschuke) B) sind weiterhin Pfropfcopolymerisate mit Butadien, Butadien/Styrol-, Butadien/Acrylnitril und Acrylat-Propfgrundlagen, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk B) können auch Pfropfpolymerisate aus

| | |
|---|---|
| 25 bis 98 Gew.-% | eines Acrylatkautschuks mit einer Glasübergangstemperatur von unter -20°C als Pfropfgrundlage (Basispolymer) |

und

| | |
|---|---|
| 2 bis 75 Gew.-% | eines copolymerisierbaren ethylenisch ungesättigten Monomeren als Pfropfauflage (Pfropfhülle) |

eingesetzt werden.

Die Pfropfgrundlage sind Acrylat bzw. Methacrylatkautschuke, wobei bis zu 40 Gew.-% weiterer Comonomerer enthalten sein können. Die C₁-C₈-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-C₁-C₆-Alkylether angeführt.

Die Pfropfgrundlage kann unvernetzt oder teilweise oder vollständig vernetzt sein. Die Vernetzung wird z.B. durch Copolymerisation von vorzugsweise 0,02 bis 5 Gew.-%, insbesondere 0,05 bis 2 Gew.-% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.-%, bezogen auf die Pfropfgrundlage, zu beschränken.

Besonders bevorzugte Pfropfgrundlagen sind Emulsionspolymerisate mit einem Gelgehalt von mehr als 60 Gew.-% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis von 1:1 bis 9:1.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke B weisen vorzugsweise eine Glasübergangstemperatur von unter - 30°C, insbesondere von unter -40°C auf.

Es versteht sich, dass auch Mischungen der vorstehend aufgeführten Kaut-schuktypen eingesetzt werden können.

Als Komponente C) können die erfindungsgemäßen Formmassen - mit oder ohne Schlagzähmodifizierung - bis zu 50, vorzugsweise 5 - 45 und insbesondere 7 - 35 Gew.-% an faser- oder teilchenförmigen Füllstoffen oder deren Mischungen enthalten.

Als faserförmige Füllstoffe seien hier nur Glasfasern, Kohlenstoff-Fasern, Aramid-Fasern, Kaliumtitanatfasern und faserförmige Silikate wie Wollastonit genannt.

Bei der Verwendung von Glasfasern können diese zur besseren Verträglichkeit mit dem Polyamid mit einer Schlichte und einem Haftvermittler ausgerüstet sein.

Im allgemeinen haben die verwendeten Glasfasern einen Durchmesser im Bereich von 6-20 µm. Die Einarbeitung kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 bis 5 mm. Als teilchenförmige Füllstoffe seien hier nur stellvertretend Glaskugeln, teilchenförmiger Wollastonit, Quarzmehl, Bornitrid, Kaolin, Calciumcarbonat, Magnesiumcarbonat (Kreide) und Titandioxid genannt, wovon Wollastonit, Titandioxid und Kaolin im allgemeinen bevorzugt werden.

Neben den wesentlichen Komponenten A) sowie gegebenenfalls B), und gegebenenfalls C) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.-%, bezogen auf das Gesamtgewicht der Komponenten A) bis C).

Übliche Zusatzstoffe sind beispielsweise Stabilisatoren und Oxidationsverzögerer, Flammschutzmittel, Mittel gegen Wärmezersetzung und Zersetzung durch ultraviolettes Licht, Gleit- und Entformungsmittel, Färbemittel, Farbstoffe und Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)- Halogeniden, z.B. Chloriden, Bromiden oder lodiden. Ferner sind sterisch gehinderte Phenole, Hydrochinone, substituierte Vertreter dieser Gruppe und Mischungen derselben, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.-% eingesetzt werden.

Gleit- und Entformungsmittel, die in der Regel in Mengen bis zu 1 Gew.-% der thermoplastischen Masse zugesetzt werden, sind Stearinsäuren, Stearylalkohol, Stearinsäurealkylester und -amide sowie Ester des Pentaerythrits mit langkettigen Fettsäuren.

Die erfindungsgemäßen Formmassen können nach an sich bekannten Verfahren hergestellt werden, indem man die Ausgangskomponenten in üblichen Mischvorrichtungen, wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen im allgemeinen im Bereich von 260 bis 350°C, vorzugsweise von 280 bis 340°C.

Die erfindungsgemäß schlagzäh modifizierten thermoplastischen Formmassen zeichnen sich gegenüber entsprechenden Formmassen auf der Basis von aliphatischen Polyamiden insbesondere durch eine sehr gute Schlagzähigkeit auch bei tiefen Temperaturen aus. Darüber hinaus werden durch die bessere Wärmebeständigkeit der teilaromatischen Copolyamide auch in dieser Hinsicht Vorteile erzielt (die natürlich durch den Kautschuk mit niedriger Wärmebeständigkeit teilweise kompensiert werden.)

Aufgrund ihres ausgewogenen Eigenschaftsspektrums eignen sich die erfindungsgemäßen Formmassen insbesondere zur Herstellung von Fasern, Folien und Formkörpern, insbesondere für Gehäuseteile im Fahrzeugbau.

### Anwendungsbeispiele

Es wurden folgende Komponenten eingesetzt:

### Komponente A

- A/l:: Co-Polyamid aus 30 Gew.-% Einheiten, die sich von ε-Caprolactam und 70 Gew.-% Einheiten, die sich von Terephthalsäure und Hexamethylendiamin ableiten

Eine wässrige Lösung, bestehend aus 35 kg ε-Caprolactam, 55 kg Terephthalsäure, 38,5 kg Hexamethylendiamin und 128,5 kg Wasser wurde aus einem beheizten Vorratsbehälter bei ca. 80°C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 295°C hatte, bei kräftiger Umwälzung beheizt. Der Verdampfer hatte eine Länge von 3 m und einen Inhalt von 180 ml und eine wärmeübertragende Oberfläche von etwa 1300 cm². Die Verweilzeit im Verdampfer betrug 50 sec. Das aus dem Verdampfer austretende Gemisch aus Präpolymeren und Wasserdampf hatte eine Temperatur von 290°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 I Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,05 Gew.-% und einen Gehalt an ε-Caprolactam von weniger als 0,1 Gew.-%. Als Kolonnensumpf erhielt man eine wässrige Lösung von Hexamethylendiamin, die 80 Gew.-% Hexamethylendiamin und 1 bis 3 % ε-Caprolactam, jeweils bezogen auf erzeugtes Poly-amid enthielt. Diese Lösung wurde über eine Pumpe wieder vor dem Eintritt in den Verdampfer der Ausgangssalzlösung zugegeben.

Nach dem Verdampfer hatte das Präpolymere eine relative Viskosität von 1,25, gemessen in 98 gew.-%iger Schwefelsäure bei 20°C und wies nach der Endgruppenanalyse einen Umsatz von 93 bis 95 % auf. Der Gehalt an Bis-hexamethylentriamin betrug 0,1 bis 0,15 Gew.-%, bezogen auf Polyamid.

Nach Austritt der Polymerschmelze aus dem Abscheider hatte das Polyamid eine sehr helle Eigenfarbe und einen äußerst niedrigen Gehalt an Bis-hexamethylentriamin von 0,17 % sowie eine relative Viskosität von 1,65 bis 1,80.

Das Produkt wies in etwa eine Äquivalenz von Carboxyl- und Aminoendgruppen auf.

Der Gehalt an extrahierbaren Anteilen (Extraktion mit Methanol) betrug 3,1 bis 3,3 Gew.-%.

Im Austragsextruder wurde die Schmelze dann auf Normaldruck entspannt und bei einer Verweilzeit von weniger als 1 Minute praktisch nicht mehr weiter kondensiert. Das erhaltene Granulat wurde durch kontinuierliche Festphasenkondensation mit überhitztem Wasserdampf bei 195°C und einer Verweilzeit von 30 Stunden auf eine Endviskosität von η-rel = 2,50 kondensiert. Der Gehalt an extrahierbaren Anteilen betrug dann 0,2 Gew.-% (Methanolextrakt).

A/V: Zum Vergleich wurde Polyhexamethylenadipinsäureamid mit einer relativen Viskosität von 2,7 (Ultramid® A3 der BASF AG) eingesetzt.

### Komponente B

B/I: Polymerisat aus Ethylen/n-Butylacrylat/Acrylsäure/Maleinsäureanhydrid (Gew.-Verh. 65/30/4.5/0.5) mit einem Schmelzindex (MFI) von 10,5 g/min (gemessen bei 190°C und 2,16 kg Belastung)
B/2: Ethylen-Propylen-Kautschuk (Gew.-Verh. Ethylen:Propylen etwa 75:25), gepfropft mit Maleinsäureanhydrid kommerziell erhältlich von Exxon-Chemicals unter der Bezeichnung Exxelor® VA 1803

### Komponente C

### C/1: Wollastonit

Die Komponenten A, B und gegebenenfalls C wurden gemischt auf einem Zweischneckenextruder aufgeschmolzen und bei einer Massetemperatur von 320°C extrudiert. Das Extrudat wurde abgekühlt, durch ein Wasserbad geleitet und granuliert. Zur Bestimmung der Schlagzähigkeit nach Izod bzw. nach DIN 53 453 sowie der mehraxialen Schädigungsarbeit in Anlehnung an DIN 53 443 wurden aus dem Granulat durch Spritzguss die entsprechenden Prüfkörper hergestellt.

Die Zusammensetzung der Massen und die Ergebnisse der Messungen sind der nachstehenden Tabelle zu entnehmen.

**Tabelle:**

| (alle Mengenangaben in Gew.-%) | | | | | | | | | | | |
|---|---|---|---|---|---|---|---|---|---|---|---|
| Versuch | Zusammensetzung | | | Schlagzähigkeit nach Izod (kJ/m²) | | | Lochkerbschlagzähigkeit (kJ/m²) | | | Schädigungsarbeit W₅₀ (Nm) | |
| | A | B | C | +23°C | -20°C | -40°C | +23°C | -20°C | -40°C | +23°C | -20°C |
| 1 | 80 A/1 | 20 B/1 | - | 88 | 22 | 15 | 120 | 122 | 94 | - | - |
| 2V | 80 A/V | 20 B/1 | - | 89 | 15 | 14 | 105 | 88 | 67 | - | - |
| 5 | 80 A/1 | 20 B/2 | - | 117 | 98 | 30 | 50 | 35 | 12 | - | - |
| 6V | 80 A/V | 20 B/2 | | 1039 | 30 | 20 | 50 | 17 | 12 | - | - |
| 7 | 75 A/1 | 5 B/1 | 20 C/1 | - | - | - | 9 | 5 | | 66 | 36 |
| 8V | 75 A/V | 5 B/1 | 20 C/1 | - | - | - | 8 | 3 | | 52 | 17 |

Die Versuche belegen, dass die erfindungsgemäßen Formmassen im Vergleich zu bekannten Formmassen bei tiefen Temperaturen verbesserte Schlagzähigkeiten (auch mehraxial) aufweisen.

Die erfindungsgemäßen teilaromatischen Polyamide können, wie erwähnt mit vielen üblichen Verarbeitungshilfsmitteln und Zusätzen versehen werden, die ihre Eigenschaften weiter verbessern.

Eine besonders interessante Eigenschaft ist ihre Eignung zur Herstellung flammwidrig ausgerüsteter Halbzeuge und Formteile. Hierzu ist im einzelnen das folgende zu sagen:

Als Flammschutzmittel wird bevorzugt roter Phosphor eingesetzt.

In diesem Fall wird beim Konfektionieren erfahrungsgemäß ein Anstieg des Molekulargewichts beobachtet, erkennbar an einem steigenden K-Wert. Der Anstieg lässt sich durch Zugabe eines entsprechenden Reglers wie Mono- oder Dicarbonsäure kompensieren.

Bevorzugt enthalten flammwidrig ausgerüstete Massen, bezogen auf ihr Gesamtgewicht z.B. 5 bis 20 Gew.-% roten Phosphor und 0,05 bis 5 Gew.-% eines üblichen Reglers.

### Anwendungsbeispiel 3

Verwendet wird ein erfindungsgemäßes teilaromatisches Copolyamid mit einem Anfangs-K-Wert von 69 bis 70. Als Regler dient Sebazinsäure bzw. Palmitinsäure

Die Masse enthält weiter 6,8 Gew.-% roten Phosphor, 25 Gew.-% Glasfasern und ferner ein Gleitmittel (Calciumstearat bzw. Stearylstearat) und einen handelsüblichen Oxidationsstabilisator (®Irganox 1098) in jeweils üblicher Menge.

Es werden folgende Eigenschaften beobachtet:

| Versuch | A | B | C |
|---|---|---|---|
| Sebazinsäure-Konzentr. | 0,9 % | 0,2 % | 0,1 % |
| K-wert | 56,8 | 72,1 | 73,7 |
| LOI | 25,0 | 25,6 | - |

Beispiele für Palmitinsäure als Regler

| Versuch | D | E | F |
|---|---|---|---|
| Palmitinsäure-Konzentr. | 1,0 % | 0,7 % | 0,4 % |
| K-Wert | 65,4 | 66,4 | 70,0 |
| LOI | 25,6 | 25,6 | 25,6 |

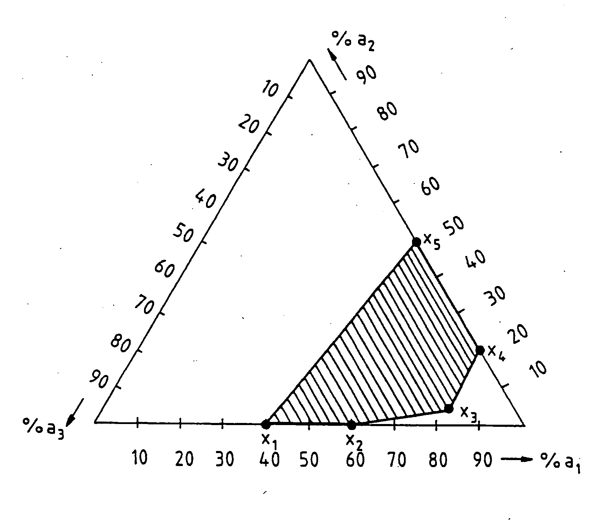

## Patentansprüche

1. Teilaromatische Copolyamide, **dadurch gekennzeichnet, daß** sie
A) 50 - 80 Gew.-%Einheiten, die sich von Terephthalsäure und Hexamethylendiamin ableiten, und
B) 20 - 50 Gew.-%Einheiten, die sich von ε-Caprolactam ableiten,
enthalten und die Copolyamide einen Triamingehalt von weniger als 0,5 Gew.-% aufweisen.

2. Teilaromatische Copolyamide nach Anspruch 1, **dadurch gekennzeichnet, daß** sie
A) 60 - 75 Gew.-% Einheiten, die sich von Terephthalsäure und Hexamethylendiamin ableiten, und
B) 25 - 40 Gew.-% Einheiten, die sich von ε-Caprolactam ableiten,
enthalten.

3. Verwendung der teilaromatischen Copolyamide gemäß den Ansprüchen 1 oder 2 zur Herstellung von Folien, Fasern und Formkörpern.

4. Formkörper, erhältlich aus teilaromatischen Copolyamiden gemäß den Ansprüchen 1 oder 2 als wesentliche Komponenten.

## Claims

1. Partly aromatic copolyamides , **characterized in that** they comprise
A) 40-80% by weight of units derived from terephthalic acid and hexamethylenediamine and
B) 20-50% by weight of units derived from ε-caprolactam and the copolyamides have a triamine content of less than 0.5% by weight.

2. Partly aromatic copolyamides according to claim 1, **characterized in that** they comprise
A) 60-75% by weight of units derived from terephthalic acid and hexamethylenediamine and
B) 25-40% by weight of units derived from ε-caprolactam.

3. The use of the partly aromatic copolyamides according to claims 1 or 2 for producing films, fibers and moldings.

4. Moldings obtainable from partly aromatic copolyamides according to claims 1 or 2 as essential components.

## Revendications

1. Copolyamides partiellement aromatiques, **caractérisés en ce qu'**ils contiennent :
A) 50-80 % en poids de motifs qui dérivent de l'acide téréphtalique et de l'hexaméthylènediamine,
B) 20-50 % en poids de motifs qui dérivent de ε-caprolactame et les copolyamides présentant une teneur en triamine de moins de 0,5% en poids.

2. Copolyamides partiellement aromatiques selon la revendication 1, **caractérisés en ce qu'**ils contiennent
A) 60-75 % en poids de motifs qui dérivent de l'acide téréphtalique et de l'hexaméthylènediamine,
B) 25-40 % en poids de motifs qui dérivent de ε-caprolactame.

3. Utilisation des copolyamides partiellement aromatiques selon les revendications 1 ou 2 pour la fabrication de feuilles, de fibres, et de corps moulés.

4. Corps moulés, obtenus à partir de copolyamides partiellement aromatiques selon les revendications 1 ou 2 en tant que constituants essentiels.
